# EUROPEAN PATENT APPLICATION

(11) **EP 4 138 242 A1**
(43) Date of publication of application: **22.02.2023**
(21) Application number: 22305617.7
(22) Date of filing: 26.04.2022
(51) Int. Cl.: H02H 3/04, H02H 7/00, H02H 9/04

(54) **PROTECTION DEVICE FOR SURGE PROTECTION DEVICE**

(30) Priority: 16.08.2021 CN 202121911814 U
(71) Applicant: Schneider Electric Industries SAS, 92500 Rueil-Malmaison (FR)
(72) Inventor: GAO, Jingxiang, Shanghai 201203 (CN); TIAN, Simon, 38320 Eybens (FR); HUA, Jie, Shanghai 201203 (CN); LI, Xiaodong, Shanghai 201203 (CN); MA, Feng, Shanghai 201203 (CN); XIAO, Peng, Shanghai 201203 (CN)
(74) Representative: Manitz Finsterwald Patent- und Rechtsanwaltspartnerschaft mbB

(57) **Abstract**

The present disclosure relates to a protection device for a surge protection device, including: a switch apparatus, configured to connect in series with the surge protection device; a current detection apparatus, electrically connected to a series circuit of the switch apparatus and the surge protection device, and configured to detect a current flowing through the surge protection device; a controller, electrically connected to the current detection apparatus, and configured to generate a control signal when an energy generated by the surge protection device which is determined according to the current and a duration of the current is greater than a first threshold, or generate a control signal when a lifetime value of the surge protection device which is determined according to the current is less than a second threshold, or generate a control signal when the current is greater than a third threshold; and a switch actuation apparatus, electrically connected to the controller and force-coupled to the switch apparatus, and configured to generate an actuating force according to the control signal generated by the controller to cause the switch apparatus to be switched off.

## Description

### TECHNICAL FIELD

The present disclosure relates to the technical field of low-voltage power distribution, in particular to a protection device for a surge protection device.

### BACKGROUND

In low-voltage power distribution systems, Surge Protection devices (SPDs) are widely used. Most of the existing SPDs employ Metal Oxide Varistors (MOVs), which have advantages of fast response, low residual voltage, and strong impact resistance, as lightning protection elements. However, MOV elements are inflammable and explosive elements, especially when an MOV is subjected to a surge and transient overvoltage, the MOV will deteriorate significantly, and is easy to burn and cause the SPD to catch fire, resulting in electrical fires and other dangers.

In order to solve the above problem, low-temperature solder joint tripping technology has been proposed. That is, a thermal tripping device based on a principle that low-temperature solder melts at a high temperature is installed at a pin of an MOV, and when the MOV heats up, the temperature is transmitted to a low temperature solder joint, the melting of solder makes a tripping mechanism connected to the solder joint act, thereby breaking the path of the MOV and making the circuit out of danger. However, this technology can protect the MOV element only when an instantaneous current flowing through the SPD does not exceed a protection current of the SPD.

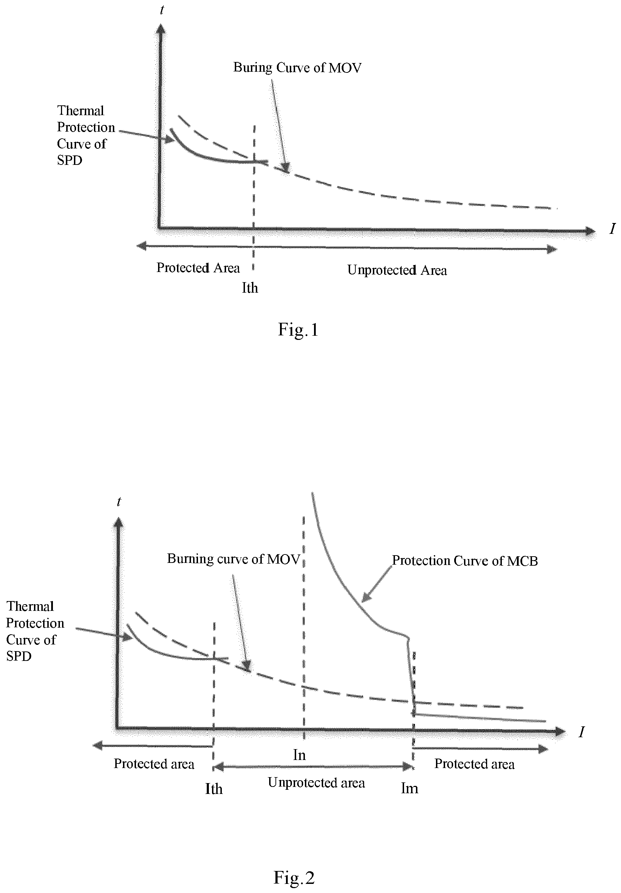

Fig. 1 shows a schematic diagram of a thermal protection curve of an SPD and a burning curve of an MOV. As shown in Fig. 1, an abscissa represents an instantaneous current (7) flowing through the SPD, an ordinate represents time (t), a solid black line represents a thermal protection curve of the SPD, and a black dotted line represents the burning curve of the MOV. Fig. 1 shows the intersection between the thermal protection curve of the SPD and the burning curve of the MOV, and a current value corresponding to the intersection can be a value of the protection current of the SPD, which, for example, can be denoted as Ith. When the value of the instantaneous current flowing through the SPD does not exceed the value of the protection current (Ith) of the SPD, the MOV element can be protected through the low-temperature solder joint tripping technology, thereby preventing the SPD from catching fire, which corresponds to the protected area in Fig. 1. However, when the value of the instantaneous current flowing through the SPD exceeds the value of the protection current (Ith) of the SPD, the protection of the MOV element cannot be achieved even if the low-temperature solder joint tripping technology is adopted, so that the SPD is in an unprotected state, that is, corresponding to the unprotected area in Fig. 1.

In order to reduce the possibility of SPD fire, a technical scheme of configuring a backup protection device for SPD is proposed. The backup protection device can be, for example, a Micro Circuit Breaker (MCB). The MCB can sense the instantaneous current flowing through the SPD, and when the value of the instantaneous current flowing through the SPD exceeds the current threshold, the MCB can cut off the current in the loop of the SPD in a short time, thereby preventing the SPD from catching fire. However, when the value of the instantaneous current flowing through the SPD does not exceed the current threshold, it takes a long time for the MCB to cut off the current in the loop of the SPD, so that the SPD cannot be protected in a timely manner. A current threshold can be determined according to the thermal tripping curve and magnetic tripping curve of the MCB. For example, the current threshold can be a value of the instantaneous current flowing through the SPD corresponding to a demarcation point of the thermal tripping curve and the magnetic tripping curve of the MCB. This current threshold can be denoted as Im, for example.

In a circuit system in which both an MOV and an MCB are configured, there are cases where the value of the protection current of the SPD is smaller than the above-mentioned current threshold, that is, there are cases where Ith<Im. Therefore, when the value of the instantaneous current flowing through the SPD exceeds the value of the protection current of the SPD and is smaller than the above current threshold, on the one hand, the protection of the MOV cannot be realized through the low-temperature solder joint tripping technology; on the other hand, the MCB cannot cut off the current in the loop of the SPD in a timely manner, leaving the SPD in an unprotected state.

Fig. 2 shows a schematic diagram of a thermal protection curve of an SPD, a burning curve of an MOV and a protection curve of an MCB. In Fig. 2, the protection curve of the MCB is added on the basis of Fig. 1, wherein the current threshold for protecting the SPD is Im, and the minimum current that can be induced by the MCB is In. As shown in Fig. 2, when the value of the instantaneous current flowing through the SPD exceeds the value of the protection current (Ith) of the SPD but is less than a above current threshold (Im), the SPD is in an unprotected state, which corresponds to the unprotected area in Fig. 2.

In this case, burning of the MOV can cause the SPD to catch fire, causing dangers such as electrical fires in the entire circuit system including the SPD and circuits protected by the SPD.

### SUMMARY

In order to overcome the defects in the prior art, the present disclosure provides a protection device for a surge protection device.

According to an embodiment of the present disclosure, there is provided a protection device for a surge protection device, comprising: a switch apparatus, configured to connect in series with the surge protection device; a current detection apparatus, electrically connected to a series circuit of the switch apparatus and the surge protection device, and configured to detect a current flowing through the surge protection device; a controller, electrically connected to the current detection apparatus, and configured to generate a control signal when an energy generated by the surge protection device which is determined according to the current and a duration of the current is greater than a first threshold, or generate a control signal when a lifetime value of the surge protection device which is determined according to the current is less than a second threshold, or generate a control signal when the current is greater than a third threshold; and a switch actuation apparatus, electrically connected to the controller and force-coupled to the switch apparatus, and configured to generate an actuating force according to the control signal generated by the controller to cause the switch apparatus to be switched off.

Optionally, the controller can variably set one of a plurality of first candidate thresholds as the first threshold.

Optionally, the controller can variably set one of a plurality of second candidate thresholds as the second threshold.

Optionally, the controller can variably set one of a plurality of third candidate thresholds as the third threshold.

Optionally, the protection device further comprises: a signal processing apparatus, electrically connected between the current detection apparatus and the controller, and configured to process an electrical signal generated by the current detection apparatus measuring the current and output a processed electrical signal; and the controller generates a control signal based on the processed electrical signal.

Optionally, the signal processing apparatus comprises: a filter, electrically connected to the current detection apparatus, and configured to filter the electrical signal to generate a filtered signal; and an analog-to-digital converter, electrically connected to the filter, and configured to convert the filtered signal into a digital signal and output the digital signal to the controller as a processed electrical signal; the controller comprises a digital integrator, configured to integrate the processed electrical signal to generate an integrated electrical signal and generate the control signal based on the integrated electrical signal.

Optionally, the signal processing apparatus comprises: a filter, electrically connected to the current detection apparatus, and configured to filter the electrical signal to generate a filtered signal; an analog integrator, electrically connected to the filter, and configured to integrate the filtered signal to generate an analog signal; and an analog-to-digital converter, electrically connected between the analog integrator and the controller, and configured to convert the analog signal into a digital signal and output the digital signal to the controller as the processed electrical signal.

Optionally, the current detection apparatus is a Rogowski coil or a current induction coil or a voltage induction coil.

Optionally, the switch apparatus is a circuit breaker.

The protection device according to embodiments of the present disclosure can disconnect the SPD from the power supply system when the energy of the SPD exceeds the threshold, the lifetime of the SPD is relatively short, or the current flowing through the SPD exceeds the threshold, so that the current in the loop of the SPD can be cut off more accurately and flexibly, so as to protect the SPD and prevent the SPD from catching fire, thereby avoiding the occurrence of dangers such as electrical fire.

### BRIEF DESCRIPTION OF THE DRAWINGS

These and/or other aspects, features and advantages of the present disclosure will become clearer and easier to understand from the following description of the embodiments in conjunction with the accompanying drawings, wherein:
Fig. 1 shows a schematic diagram of a thermal protection curve of an SPD and a burning curve of an MOV;
Fig. 2 shows a schematic diagram of a thermal protection curve of an SPD, a burning curve of an MOV and a protection curve of an MCB;
Fig. 3 is a schematic diagram of a circuit system in which a protection device according to an embodiment of the present disclosure can be applied;
Fig. 4 is a schematic diagram of a circuit structure of a protection device according to an embodiment of the present disclosure;
Fig. 5 is a schematic diagram of another circuit structure of a protection device according to an embodiment of the present disclosure;
Fig. 6 is a schematic diagram of another circuit structure of a protection device according to an embodiment of the present disclosure;
Fig. 7 is a schematic diagram of another circuit structure of a protection device according to an embodiment of the present disclosure;
Fig. 8 is a schematic diagram of a specific implementation of a circuit structure of a protection device according to an embodiment of the present disclosure;
Fig. 9 shows a schematic diagram of a lifetime curve of an SPD and a protection curve of a protection device according to an embodiment of the present disclosure;
Fig. 10 shows a schematic diagram of a thermal protection curve of an SPD, a burning curve of an MOV, a protection curve of an MCB, and a protection curve of a protection device according to an embodiment of the present disclosure; and
Fig. 11 shows an exemplary working logic diagram of the protection devices shown in Figs. 5 to 8 according to an embodiment of the present disclosure.

### DETAILED DESCRIPTION

The present disclosure will be described in detail below with reference to the exemplary embodiments of the present disclosure. However, the present disclosure is not limited to the embodiments described herein, but can be embodied in many different forms. The described embodiments are only provided so that this disclosure will be thorough and complete, and will fully convey the concept of the disclosure to those skilled in the art. Features of the various embodiments described can be combined with or substituted by each other, unless explicitly excluded or should be excluded from the context. In the embodiments of the present disclosure, unless explicitly stated otherwise, "connected" does not necessarily mean "direct connection" or "direct contact", but merely that electrical connection is required.

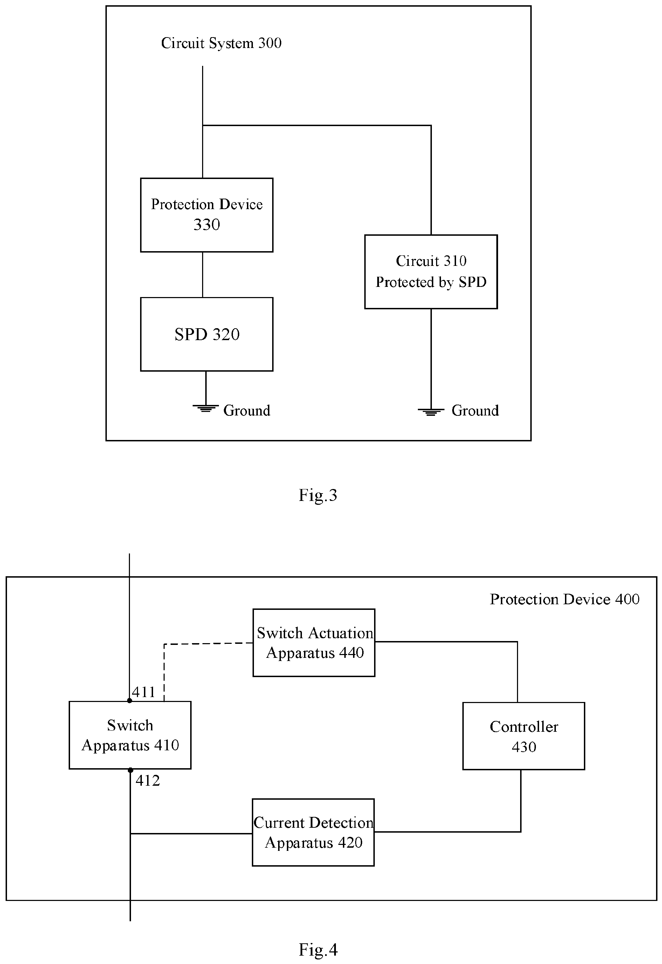

Embodiments of the present disclosure provide a protection device for a surge protection device (SPD) to protect the SPD. First, a circuit system in which a protection device according to an embodiment of the present disclosure can be applied will be described with reference to Fig. 3. Fig. 3 is a schematic diagram of a circuit system in which a protection device according to an embodiment of the present disclosure can be applied. As shown in Fig. 3, a circuit system 300 includes a circuit 310 protected by SPD, an SPD 320, and a protection device 330 for protecting the SPD 320. The SPD 320 is connected in parallel to the circuit 310 protected by SPD and is electrically connected to ground. An output terminal of the circuit 310 protected by SPD can be electrically connected to ground (as shown in Fig. 3), or can be electrically connected to other product circuits (not shown). In addition, the circuit 310 protected by SPD can serve as a power supply system for the SPD 320. The protection device 330 is connected in series with the SPD 320 to protect the SPD. Specifically, the protection device 330 can detect a current flowing through the SPD 320 and disconnect the SPD 320 from the power supply system when an energy generated by the SPD 320 which is determined according to the current and a duration of the current is greater than a first threshold, or disconnect the SPD 320 from the power supply system when a lifetime value of the SPD 320 which is determined according to the current is less than a second threshold, or disconnect the SPD 320 from the power supply system when the current is greater than a third threshold. With the protection device 330, the SPD 320 can be disconnected from the power supply system when the energy of the SPD 320 exceeds the threshold, or the lifetime of the SPD 320 is relatively short, or the current flowing through the SPD 320 exceeds the threshold, so that the current in the loop of the SPD 320 can be cut off more accurately and flexibly, to protect the SPD 320 and prevent the SPD 320 from catching fire, thereby avoiding the occurrence of dangers such as electrical fire.

The circuit structure of the protection device according to the embodiment of the present disclosure will be described in detail below with reference to Figs. 4 to 8.

Fig. 4 is a schematic diagram of a circuit structure of a protection device according to an embodiment of the present disclosure. As shown in Fig. 4, a protection device 400 includes a switch apparatus 410, a current detection apparatus 420, a controller 430 and a switch actuation apparatus 440. The switch apparatus 410 has an input terminal 411 and an output terminal 412, wherein the input terminal 411 is connected to the circuit protected by SPD, and the output terminal 412 is connected to the SPD, that is, the switch apparatus 410 is connected in series with the SPD. The SPD is electrically connected between the circuit protected by SPD and a ground point. The current detection apparatus 420 is electrically connected to the series circuit of the switch apparatus 410 and the SPD and configured to detect a current flowing through the SPD. The controller 430 is electrically connected to the current detection apparatus 420, and configured to generate a control signal when an energy generated by the SPD which is determined according to the current flowing through the SPD and a duration of the current is greater than a first threshold, or generate a control signal when a lifetime value of the SPD 320 which is determined according to the current flowing through the SPD is less than a second threshold, or generate a control signal when the current flowing through the SPD is greater than a third threshold. The switch actuation apparatus 440 is electrically connected to the controller 430 and force-coupled to the switch apparatus 410, and is configured to generate an actuating force according to the control signal generated by the controller 430 to cause the switch apparatus 410 to be switched off, thereby disconnecting the SPD from the power supply system.

According to one example of the present disclosure, packages of one or more of the switch apparatus 410, the current detection apparatus 420, the controller 430 and the switch actuation apparatus 440 can be independent from one another. For example, the switch apparatus 410 can be packaged in one housing, the current detection apparatus 420 and the controller 430 can be packaged in another housing, and the switch actuation apparatus 440 can be packaged in a separate housing from the above two housings.

In the present disclosure, when the current flowing through the SPD is very small, the current detection apparatus 420 may not be able to detect the current or the electrical signal generated due to the current can be easily lost, resulting in the controller 430 not being able to accurately determine whether the energy of the SPD exceeds the threshold, or whether the lifetime of the SPD is short, or whether the current flowing through the SPD exceeds the threshold, thereby not being able to control the switch actuation apparatus accurately to drive the switch apparatus to be switched off, and thus the SPD cannot be protected in a timely manner. In this regard, a signal processing apparatus can be provided between the current detection apparatus 420 and the controller 430 to improve the accuracy of the operation of the controller 430.

For example, the protection device 400 can further include a signal processing apparatus electrically connected between the current detection apparatus and the controller, and configured to process an electrical signal generated by the current detection apparatus measuring the current, and output a processed electrical signal. In this example, the controller generates a control signal based on the processed electrical signal to cause the switch actuation apparatus to drive the switch apparatus to be switched off.

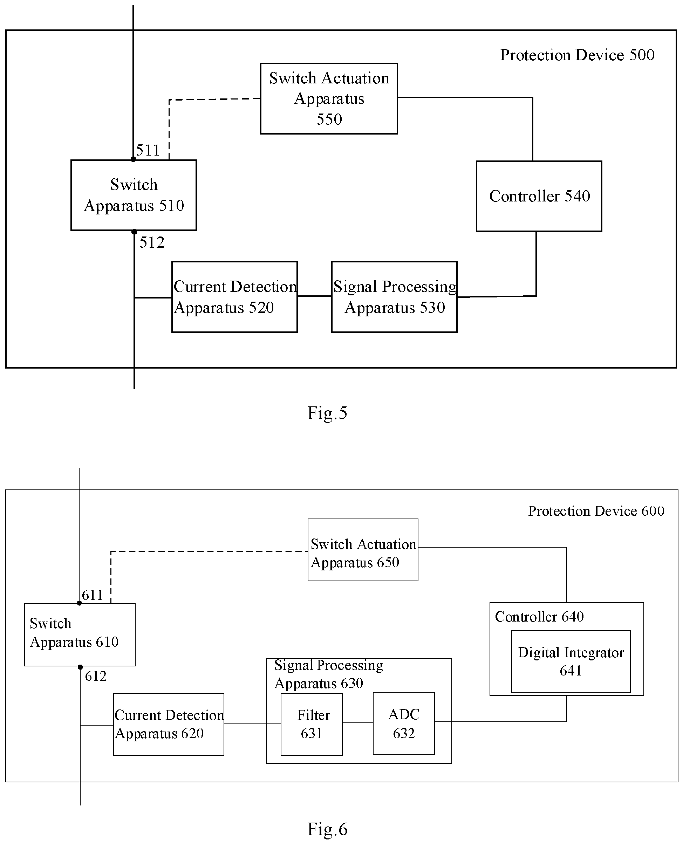

The circuit structure of the protection device including the signal processing apparatus will be described below with reference to Fig. 5. Fig. 5 is a schematic diagram of another circuit structure of a protection device according to an embodiment of the present disclosure.

As shown in Fig. 5, a protection device 500 includes a switch apparatus 510, a current detection apparatus 520, a signal processing apparatus 530, a controller 540 and a switch actuation apparatus 550. The switch apparatus 510 is similar to the switch apparatus 410 in Fig. 4, having an input terminal 511 and an output terminal 512, wherein the input terminal 511 is connected to the circuit protected by SPD, and the output terminal 512 is connected to the SPD, that is, the switch apparatus 510 is connected in series with the SPD. The SPD is electrically connected between the circuit protected by SPD and a ground point. The current detection apparatus 520 is similar to the current detection apparatus 420 in Fig. 4, it is electrically connected to the series circuit of the switch apparatus 510 and the SPD and configured to detect a current flowing through the SPD. The signal processing apparatus 530 is electrically connected between the current detection apparatus 520 and the controller 540, and configured to process an electrical signal generated by the current detection apparatus 520 measuring the current, and output a processed electrical signal. The controller 540 generates a control signal based on the processed electrical signal. Specifically, when the processed electrical signal indicates that an energy generated by the SPD determined according to the current flowing through the SPD and a duration of the current is greater than a first threshold, or a lifetime value of the SPD which is determined according to the current flowing through the SPD is less than a second threshold, or when the current flowing through the SPD is greater than a third threshold, the controller 540 generates a control signal. The switch actuation apparatus 550 is electrically connected to the controller 540 and force-coupled to the switch apparatus 510, and is configured to generate an actuating force according to the control signal generated by the controller 540 to cause the switch apparatus 510 to be switched off.

According to one example of the present disclosure, packages of one or more of the switch apparatus 510, the current detection apparatus 520, the signal processing apparatus 530, the controller 540, and the switch actuation apparatus 550 can be independent of each other. For example, the switch apparatus 510 can be packaged in one housing, the current detection apparatus 520, the signal processing apparatus 530 and the controller 540 can be packaged in another housing, and the switch actuation apparatus 550 can be packaged in a separate housing from the above two housings.

The processing performed by the signal processing apparatus 530 on the electrical signal generated by the current detection apparatus 520 measuring the current can include, for example, one or more of filtering, analog-to-digital conversion, integration, amplification, current limiting, voltage limiting, and the like. The circuit structure of the signal processing apparatus and the circuit structure of the corresponding protection device are described below with reference to an example in which the processing performed by the signal processing apparatus 530 on the electrical signal generated by the current detection apparatus 520 measuring the current includes filtering, analog-to-digital conversion and integration.

Fig. 6 is a schematic diagram of another circuit structure of a protection device according to an embodiment of the present disclosure. As shown in Fig. 6, a protection device 600 includes a switch apparatus 610, a current detection apparatus 620, a signal processing apparatus 630, a controller 640 and a switch actuation apparatus 650. The switch apparatus 610 is similar to the switch apparatus 510 in Fig. 5, having an input terminal 611 and an output terminal 612, wherein the input terminal 611 is connected to the circuit protected by SPD, and the output terminal 612 is connected to the SPD, that is, the switch apparatus 610 is connected in series with the SPD. The SPD is electrically connected between the circuit protected by SPD and a ground point. The current detection apparatus 620 is similar to the current detection apparatus 520 in Fig. 5, it is electrically connected to the series circuit of the switch apparatus 610 and the SPD and configured to detect a current flowing through the SPD. The signal processing apparatus 630 is similar to the signal processing apparatus 530 in Fig. 5, it is electrically connected between the current detection apparatus 620 and the controller 640, and configured to process an electrical signal generated by the current detection apparatus 620 measuring the current and output a processed electrical signal. Specifically, the signal processing apparatus 630 includes a filter 631 and an analog-to-digital converter (ADC) 632. The filter 631 is electrically connected to the current detection apparatus 620 and configured to filter an electrical signal generated by the current detection apparatus 620 measuring the current to generate a filtered signal. The analog-to-digital converter 632 is electrically connected to the filter 631, and configured to convert the filtered signal into a digital signal and output the digital signal to the controller 640 as a processed electrical signal. The controller 640 includes a digital integrator 641 configured to perform integration processing on the above processed electrical signal to generate an integrated electrical signal. The controller 640 generates a control signal based on the integrated electrical signal. Specifically, when the integrated electrical signal indicates that the energy generated by the SPD which is determined according to the current flowing through the SPD and the duration of the current is greater than a first threshold, or the lifetime value of the SPD which is determined according to the current flowing through the SPD is less than a second threshold, or when the current flowing through the SPD is greater than a third threshold, the controller 640 generates a control signal. The switch actuation apparatus 650 is electrically connected to the controller 640 and is force-coupled to the switch apparatus 610, and is configured to generate an actuating force according to the control signal generated by the controller 640 to cause the switch apparatus 610 to be switched off.

In the example shown in Fig. 6, the current detection apparatus 620 can output a current signal. The filter 631 filters the current signal to remove clutter in the current signal, and outputs a filtered signal. The analog-to-digital converter 632 converts the filtered signal to a digital signal (e.g., a voltage signal). The digital integrator 641 integrates the digital signal to generate a current signal. The controller 640 generates a control signal based on the current signal generated by the digital integrator 641.

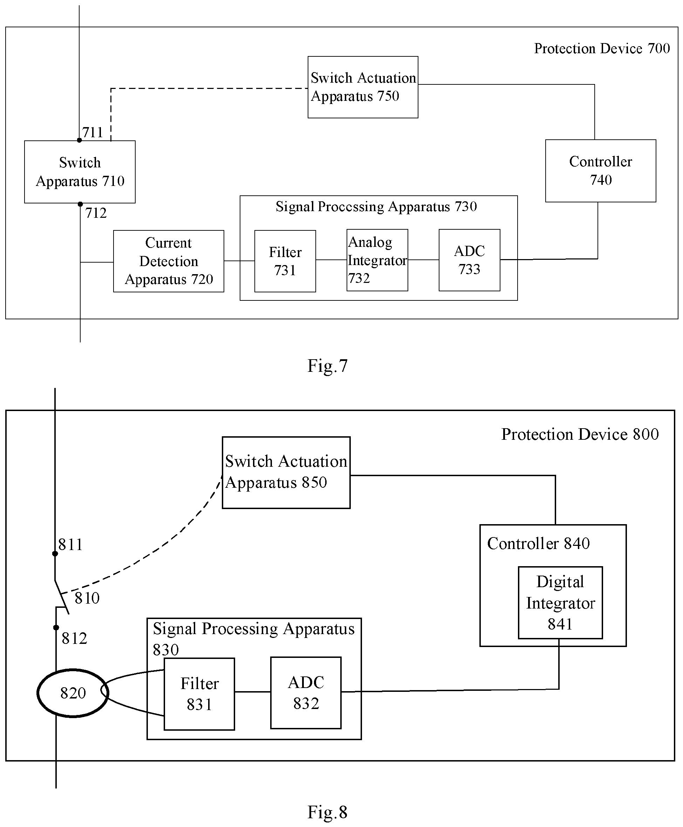

Fig. 7 is a schematic diagram of another circuit structure of a protection device according to an embodiment of the present disclosure. As shown in Fig. 7, a protection device 700 includes a switch apparatus 710, a current detection apparatus 720, a signal processing apparatus 730, a controller 740 and a switch actuation apparatus 750. The switch apparatus 710 is similar to the switch apparatus 610 in Fig. 6, having an input terminal 711 and an output terminal 712, wherein the input terminal 711 is connected to the circuit protected by SPD, and the output terminal 712 is connected to the SPD, that is, the switch apparatus 710 is connected in series with the SPD. The SPD is electrically connected between the circuit protected by SPD and a ground point. The current detection apparatus 720 is similar to the current detection apparatus 620 in Fig. 6, it is electrically connected to the series circuit of the switch apparatus 710 and the SPD and configured to detect a current flowing through the SPD. The signal processing apparatus 730 is similar to the signal processing apparatus 630 in Fig. 6, it is electrically connected between the current detection apparatus 720 and the controller 740, and configured to process an electrical signal generated by the current detection apparatus 720 measuring the current and output a processed electrical signal. Specifically, the signal processing apparatus 730 includes a filter 731, an analog integrator 732 and an analog-to-digital converter 733. The filter 731 is electrically connected to the current detection apparatus 720 and configured to filter an electrical signal generated by the current detection apparatus 720 measuring the current to generate a filtered signal. The analog integrator 732 is electrically connected to the filter 731 and configured to integrate the filtered signal to generate an analog signal. The analog-to-digital converter 733 is electrically connected between the analog integrator 732 and the controller 740, and configured to convert the analog signal into a digital signal and output the digital signal to the controller 740 as a processed electrical signal. The controller 740 is similar to the controller 640 in Fig. 6, it generates a control signal based on the processed electrical signals. Specifically, when the processed electrical signal indicates that the energy generated by the SPD which is determined according to the current flowing through the SPD and the duration of the current is greater than a first threshold, or the lifetime value of the SPD which is determined according to the current flowing through the SPD is less than a second threshold, or when the current flowing through the SPD is greater than a third threshold, the controller 740 generates a control signal. The switch actuation apparatus 750 is electrically connected to the controller 740 and is force-coupled to the switch apparatus 710, and configured to generate an actuating force according to the control signal generated by the controller 740 to cause the switch apparatus 710 to be switched off.

In the example shown in Fig. 7, the current detection apparatus 720 can output a voltage signal. The filter 731 filters the voltage signal to remove clutter in the voltage signal, and outputs a filtered signal. The analog integrator 732 integrates the filtered signal to generate an analog signal (e.g., a current signal). The analog-to-digital converter 733 converts the analog signal into a digital signal (e.g., a voltage signal), and outputs the digital signal to the controller 740 as a processed electrical signal.

According to one example of the present disclosure, the switch apparatus described above (e.g., the switch apparatus 410 in Fig. 4, or the switch apparatus 510 in Fig. 5, or the switch apparatus 610 in Fig. 6, or the switch apparatus 710 in Fig. 7) can be any circuit structure capable of switching off the current in the loop of the SPD. For example, the switch apparatus 410 in Fig. 4, or the switch apparatus 510 in Fig. 5, or the switch apparatus 610 in Fig. 6, or the switch apparatus 710 in Fig. 7 can be a conventional protection device of an SPD, e.g., a circuit breaker such as an MCB.

According to one example of the present disclosure, the current detection apparatus described above (e.g., the current detection apparatus 420 in Fig. 4, or the current detection apparatus 520 in Fig. 5, or the current detection apparatus 620 in Fig. 6, or the current detection apparatus 720 in Fig. 7) can be any circuit structure capable of detecting the current flowing through the SPD. For example, the current detection apparatus 420 in Fig. 4, or the current detection apparatus 520 in Fig. 5, or the current detection apparatus 620 in Fig. 6, or the current detection apparatus 720 in Fig. 7 can be a conventional current sensor, such as a current induction coil, a current transformer, etc. In this example, the electrical signal output by the current detection apparatus 420 in Fig. 4, or the current detection apparatus 520 in Fig. 5, or the current detection apparatus 620 in Fig. 6, or the current detection apparatus 720 in Fig. 7 is a current signal, that is, the current signal represents characteristics of the current flowing through the SPD. Example of characteristics of the current can include, for example, one or more of a magnitude of the current, that is, a value of the current, a duration of the current, or a type of the current (whether the current is a surge current or a power frequency current.

Alternatively, the current detection apparatus 420 in Fig. 4, or the current detection apparatus 520 in Fig. 5, or the current detection apparatus 620 in Fig. 6, or the current detection apparatus 720 in Fig. 7 can be a Rogowski coil. In this example, the electrical signal output by the current detection apparatus 420 in Fig. 4, or the current detection apparatus 520 in Fig. 5, or the current detection apparatus 620 in Fig. 6, or the current detection apparatus 720 in Fig. 7 is a current signal, that is, the current signal represents characteristics of the current flowing through the SPD. Compared with conventional current sensors, Rogowski coils have many advantages, such as a very wide range of measurable currents (such as 1A~120kA), the ability to withstand huge overload currents without damage, and no secondary danger of open circuits.

Alternatively, the current detection apparatus 420 in Fig. 4, or the current detection apparatus 520 in Fig. 5, or the current detection apparatus 620 in Fig. 6, or the current detection apparatus 720 in Fig. 7 can be a conventional voltage sensor, such as a voltage induction coil, etc. In this example, the electrical signal output by the current detection apparatus 420 in Fig. 4, or the current detection apparatus 520 in Fig. 5, or the current detection apparatus 620 in Fig. 6, or the current detection apparatus 720 in Fig. 7 is a voltage signal, that is, the voltage signal represents characteristics of the current flowing through the SPD.

Fig. 8 is a schematic diagram of a specific implementation of a circuit structure of a protection device according to an embodiment of the present disclosure. As shown in Fig. 8, a protection device 800 includes a switch apparatus 810, a current detection apparatus 820, a signal processing apparatus 830, a controller 840 and a switch actuation apparatus 850, wherein the switch apparatus 810 is a switch with an input terminal 811 and an output terminal 812, and the current detection apparatus 820 is a Rogowski coil, the signal processing apparatus 830 includes a filter 831 and an analog-to-digital converter 832, and the controller 840 includes a digital integrator 841.

According to one example of the present disclosure, the controller described above (e.g., the controller 430 in Fig. 4, or the controller 540 in Fig. 5, or the controller 640 in Fig. 6, or the controller 740 in Fig. 7, or the controller 840 in Fig. 8) can be any circuit structure capable of generating a control signal when the energy generated by the SPD which is determined according to the current flowing through the SPD and the duration of the current is greater than a first threshold, or when the lifetime value of the SPD which is determined according to the current is less than a second threshold, or when the current is greater than a third threshold. For example, the controller 430 in Fig. 4, or the controller 540 in Fig. 5, or the controller 640 in Fig. 6, or the controller 740 in Fig. 7, or the controller 840 in Fig. 8 can be implemented in a hardware circuit (such as an application-specific integrated circuit, a Field Programmable Gate Array (FPGA), etc.), or can also be implemented in a Micro Controller Unit (MCU).

In addition, the controller described above (e.g., the controller 430 in Fig. 4, or the controller 540 in Fig. 5, or the controller 640 in Fig. 6, or the controller 740 in Fig. 7, or the controller 840 in Fig. 8) can determine the energy generated by the SPD according to the current flowing through the SPD and the duration of the current, for comparison with the first threshold. For example, the controller 430 in Fig. 4, or the controller 540 in Fig. 5, or the controller 640 in Fig. 6, or the controller 740 in Fig. 7, or the controller 840 in Fig. 8 can determine the energy generated by the SPD according to Joule's law.

The controller described above (e.g., the controller 430 in Fig. 4, or the controller 540 in Fig. 5, or the controller 640 in Fig. 6, or the controller 740 in Fig. 7, or the controller 840 in Fig. 8) can variably set one of a plurality of first candidate thresholds as the first threshold. For example, the controller 430 in Fig. 4, or the controller 540 in Fig. 5, or the controller 640 in Fig. 6, or the controller 740 in Fig. 7, or the controller 840 in Fig. 8 can store a plurality of first candidate thresholds in advance, and can set one of the plurality of first candidate thresholds as the first threshold under various circumstances.

In addition, the controller described above (e.g., the controller 430 in Fig. 4, or the controller 540 in Fig. 5, or the controller 640 in Fig. 6, or the controller 740 in Fig. 7, or the controller 840 in Fig. 8) can determine the lifetime value of the SPD according to the current flowing through the SPD, for comparison with the second threshold. For example, the controller 430 in Fig. 4, or the controller 540 in Fig. 5, or the controller 640 in Fig. 6, or the controller 740 in Fig. 7, or the controller 840 in Fig. 8 can determine the lifetime value of the SPD according to the type of the current flowing through the SPD. Specifically, the controller can decrease the lifetime value of the SPD by an amount when the current flowing through the SPD is a surge current or the SPD suffers from overvoltage.

The controller described above (e.g., the controller 430 in Fig. 4, or the controller 540 in Fig. 5, or the controller 640 in Fig. 6, or the controller 740 in Fig. 7, or the controller 840 in Fig. 8) can variably set one of a plurality of second candidate thresholds as the second threshold. For example, the controller 430 in Fig. 4, or the controller 540 in Fig. 5, or the controller 640 in Fig. 6, or the controller 740 in Fig. 7, or the controller 840 in Fig. 8 can store a plurality of second candidate thresholds in advance, and can set one of the plurality of second candidate thresholds as the second threshold under various circumstances.

In addition, the controller described above (e.g., the controller 430 in Fig. 4, or the controller 540 in Fig. 5, or the controller 640 in Fig. 6, or the controller 740 in Fig. 7, or the controller 840 in Fig. 8) can variably set one of a plurality of third candidate thresholds as the third threshold. For example, the controller 430 in Fig. 4, or the controller 540 in Fig. 5, or the controller 640 in Fig. 6, or the controller 740 in Fig. 7, or the controller 840 in Fig. 8 can store a plurality of three candidate thresholds in advance, and can set one of the plurality of third candidate thresholds as the third threshold under various circumstances.

The plurality of first candidate thresholds, the plurality of second candidate thresholds and the plurality of third candidate thresholds described above can be determined according to the protection curve of the protection device. For example, the protection curve of the protection device can be determined according to the lifetime curve of the SPD, wherein the lifetime curve of the SPD is related to the magnitude of the current flowing through the SPD and the duration of the current. For example, when the current flowing through the SPD is relatively small, a longer duration can cause the lifetime of the SPD to expire; when the current flowing through the SPD is relatively large, a shorter duration can cause the lifetime of the SPD to expire. In a coordinate system in which the abscissa is the current flowing through the SPD and the ordinate is time, a curve can be obtained by moving the lifetime curve of the SPD downward, which can be used as the protection curve of the protection device. A plurality of energy values, a plurality of lifetime values, and a plurality of current values of the SPD corresponding to a plurality of protection points on the protection curve of the protection device can be respectively used as the plurality of first candidate thresholds, the plurality of second candidate thresholds and the plurality of third candidate thresholds described herein.

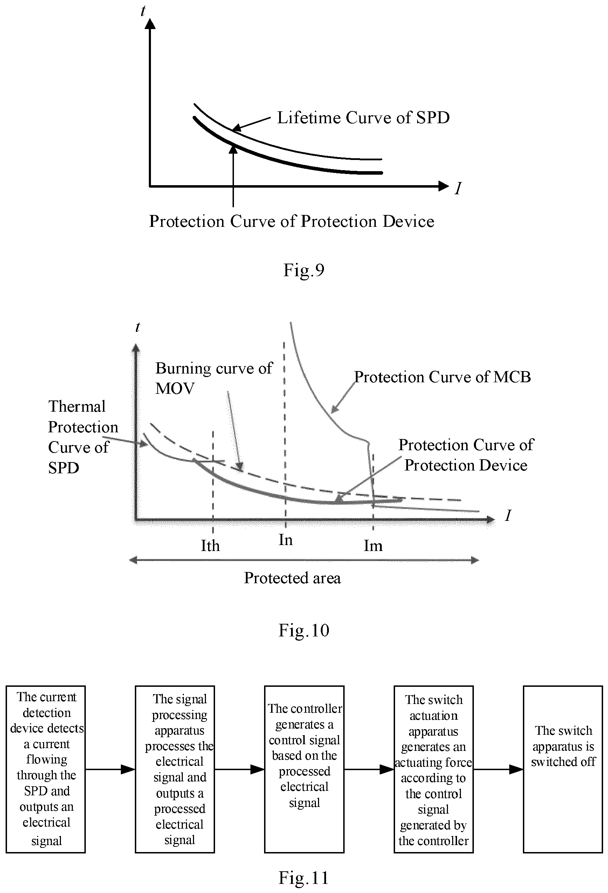

Fig. 9 shows a schematic diagram of a lifetime curve of an SPD and a protection curve of a protection device according to an embodiment of the present disclosure. As shown in Fig. 9, the abscissa represents a current (7) flowing through the SPD, the ordinate represents time (t), a thinner curve represents a lifetime curve of the SPD, and a thicker curve represents a protection curve of the protection device. The protection curve of the protection device can be obtained by moving the lifetime curve of the SPD by a certain amount.

Fig. 10 shows a schematic diagram of a thermal protection curve of an SPD, a burning curve of an MOV, a protection curve of an MCB, and a protection curve of a protection device according to an embodiment of the present disclosure. In Fig. 10, a protection curve of the protection device according to the embodiment of the present disclosure is added on the basis of Fig. 2, wherein the thicker gray curve represents a protection curve of the protection device according to the embodiment of the present disclosure, which can be similar to the protection curve of the protection device in Fig. 9. Based on the protection device of the embodiment of the present disclosure, it is possible to set a corresponding threshold according to a specific application environment to protect the SPD, thereby avoiding the occurrence of dangers such as electrical fire. In the example of Fig. 10, the value Ith of the protection current of the SPD can be 1A, the current threshold Im of the MCB for protecting the SPD can be 200A, and the current threshold (i.e., the third threshold) of the protection device for protecting the SPD can be greater than the value Ith of the protection current of the SPD and smaller than the current threshold Im of the MCB for protecting the SPD, that is, greater than 1A and less than 200A. Alternatively, the current threshold of the protection device for protecting the SPD (i.e. the third threshold) can be equal to the value Ith of the protection current of the SPD, that is, equal to 1A.

In addition, the controller can set different first thresholds, and/or different second thresholds, and/or different third thresholds for a protection device not provided with the signal processing apparatus and a protection device provided with the signal processing apparatus. For example, in the case where the signal processing apparatus is provided and the signal processing apparatus performs an amplifying operation on the electrical signal generated by the current detection apparatus measuring the current, the first threshold, and/or the second threshold, and/or the third threshold set by the controller can be respectively greater than the corresponding first threshold, and/or the second threshold, and/or the third threshold set by the controller when the signal processing apparatus is not provided.

According to one example of the present disclosure, the actuating force generated by the switch actuation apparatus described above (e.g., the switch actuation apparatus 440 in Fig. 4, or the switch actuation apparatus 550 in Fig. 5, or the switch actuation apparatus 650 in Fig. 6, or the switch actuation apparatus 750 in Fig. 7 or the switch actuation apparatus 850 in Fig. 8) according to the control signal generated by the controller can be a mechanical force or a magnetic force. The switch actuation apparatus drives the switch apparatus to be switched off through the mechanical force or the magnetic force, so that the SPD is disconnected from the power supply system. In the example in which the switch apparatus is a circuit breaker, the switch actuation apparatus can drive the circuit breaker to trip through the mechanical force or the magnetic force, thereby causing the switch apparatus to be switched off.

Fig. 11 shows an exemplary working logic diagram of the protection devices shown in Figs. 5 to 8 according to an embodiment of the present disclosure. As shown in Fig. 11, the current detection apparatus detects a current flowing through the SPD, and outputs an electrical signal. The signal processing apparatus processes the electrical signal and outputs a processed electrical signal. When the processed electrical signal indicates that the energy generated by the SPD which is determined according to the current flowing through the SPD and the duration of the current is greater than a first threshold, or the lifetime value of the SPD which is determined according to the current flowing through the SPD is less than a second threshold, or the current flowing through the SPD is greater than a third threshold, the controller generates a control signal. The switch actuation apparatus generates an actuating force according to the control signal generated by the controller to cause the switch apparatus to be switched off. Accordingly, the switch apparatus is switched off to disconnect the SPD from the power supply system.

With the protection device of the embodiment of the present disclosure, it is possible to disconnect the SPD from the power supply system when the energy of the SPD exceeds the threshold, or the lifetime of the SPD is relatively short, or the current flowing through the SPD exceeds the threshold, so that the current in the loop of the SPD can be cut off more accurately and flexibly, so as to protect the SPD and prevent the SPD from catching fire, thereby avoiding the occurrence of dangers such as electrical fire.

The block diagrams of the circuits, components, apparatuses, devices and systems involved in the present disclosure are only illustrative examples and are not intended to require or imply that the connections, arrangements, and configurations must be performed in the manner shown in the block diagrams. As those skilled in the art would appreciate, these circuits, components, apparatuses, devices and systems can be connected, arranged, and configured in any manner, as long as the desired objective can be achieved. The circuits, units, components and apparatuses involved in the present disclosure can be implemented in any suitable manner, such as an application-specific integrated circuit, a field programmable gate array (FPGA), etc., or a general-purpose processor (such as an MCU) combined with known program.

Those skilled in the art should understand that the above-mentioned specific embodiments are only examples rather than limitations, and various modifications, combinations, partial combinations and substitutions can be made to the embodiments of the present disclosure according to design requirements and other factors, as long as they are within the scope of the appended claims or their equivalents, they belong to the protection scope claimed by the present disclosure.

## Claims

1. A protection device for a surge protection device, **characterized in that** the protection device comprises:
a switch apparatus, configured to connect in series with the surge protection device;
a current detection apparatus, electrically connected to a series circuit of the switch apparatus and the surge protection device, and configured to detect a current flowing through the surge protection device;
a controller, electrically connected to the current detection apparatus, and configured to generate a control signal when an energy generated by the surge protection device which is determined according to the current and a duration of the current is greater than a first threshold, or generate a control signal when a lifetime value of the surge protection device which is determined according to the current is less than a second threshold, or generate a control signal when the current is greater than a third threshold; and
a switch actuation apparatus, electrically connected to the controller and force-coupled to the switch apparatus, and configured to generate an actuating force according to the control signal generated by the controller to cause the switch apparatus to be switched off.

2. The protection device of claim 1, **characterized in that** the controller can variably set one of a plurality of first candidate thresholds as the first threshold.

3. The protection device of any one of the preceding claims, **characterized in that** the controller can variably set one of a plurality of second candidate thresholds as the second threshold.

4. The protection device of any one of the preceding claims, **characterized in that** the controller can variably set one of a plurality of third candidate thresholds as the third threshold.

5. The protection device of any one of the preceding claims, **characterized in that** the protection device further comprises:
a signal processing apparatus, electrically connected between the current detection apparatus and the controller, and configured to process an electrical signal generated by the current detection apparatus measuring the current and output a processed electrical signal; and
the controller generates a control signal based on the processed electrical signal.

6. The protection device of claim 5, **characterized in that**
the signal processing apparatus comprises:
a filter, electrically connected to the current detection apparatus, and configured to filter the electrical signal to generate a filtered signal; and
an analog-to-digital converter, electrically connected to the filter, and configured to convert the filtered signal into a digital signal and output the digital signal to the controller as a processed electrical signal;
the controller comprises a digital integrator, configured to integrate the processed electrical signal to generate an integrated electrical signal and generate the control signal based on the integrated electrical signal.

7. The protection device of claim 5, **characterized in that** the signal processing apparatus comprises:
a filter, electrically connected to the current detection apparatus, and configured to filter the electrical signal to generate a filtered signal;
an analog integrator, electrically connected to the filter, and configured to integrate the filtered signal to generate an analog signal; and
an analog-to-digital converter, electrically connected between the analog integrator and the controller, and configured to convert the analog signal into a digital signal and output the digital signal to the controller as the processed electrical signal.

8. The protection device of any one of claims 1 to 7, **characterized in that** the current detection apparatus is a Rogowski coil or a current induction coil or a voltage induction coil.

9. The protection device of any one of claims 1 to 8, **characterized in that** the switch apparatus is a circuit breaker.
